# EUROPEAN PATENT SPECIFICATION

(11) **EP 3 186 114 B1**
(45) Date of publication and mention of the grant of the patent: **23.10.2019**
(21) Application number: 15785177.5
(22) Date of filing: 28.07.2015
(51) Int. Cl.: B60R 25/06, B60R 25/20

(54) **PREVENTION SYSTEM AGAINST MOTORCAR-THEFT**
VORRICHTUNG ZUR PREVENTON GEGEN FAHRZEUG DIEBSTAHL
SYSTÈME DE PRÉVENTION CONTRE LE VOL DE VÉHICULE

(30) Priority: 28.07.2014 HU P1400365
(43) Date of publication of application: 05.07.2017
(73) Proprietor: Váczi, Béla, 2112 Veresegyház (HU); Kalóczkai, Péter, 2112 Veresegyház (HU)
(72) Inventor: Váczi, Béla, 2112 Veresegyház (HU); Kalóczkai, Péter, 2112 Veresegyház (HU)
(74) Representative: Sipos, Jozsef
(86) International application number: PCT/HU2015/050003
(87) International publication number: WO 2016/016673

(56) References cited:
- EP-A1- 0 681 951
- EP-A1- 1 209 048
- EP-A1- 1 642 791
- EP-A2- 1 630 056
- WO-A2-01/58737
- US-A- 6 107 694

## Description

The present invention relates to a prevention system against motorcar-theft of a motorcar with manual transmission, for installation subsequently to the production of the motorcar, which system automatically switches on the units serving the mechanical and electrical protection after the intentional stop of the engine of the motorcar, said units prevent the usage and the displacement of the motorcar by incompetent persons.

EP 1 642 791 A1 discloses an anti-theft system for motorcars, which system was configured to intervene into the structure and control of the motorcar to the least extent, on the other hand the active protection is to prevent the usability of the motorcar at all the more points. Said prevention system comprises a clutch-deactivating and interlocking device operated electromechanically, to which an electric motor-operated drive unit belongs, which converts the rotational movement of the drive unit to a linear movement, thereby it has direct outputs to units of the prevention system to be operated, such as the unit for interlocking the opening of engine compartment or the unit for deactivating the clutch or, in case of missing gear-box lock, the unit for interlocking the lever of the gear-box. The central electronic unit operating the electric motor is supplied by the battery of the motorcar; furthermore the control signal of ignition, a Hall-generator giving the position of the drive unit and an inductive sensor for the activity of the lock of the gear-box are all connected to the central electronic unit. The inductive sensor includes an anti-sabotage protection that also extends to the line connecting the inductive sensor with the central electronic unit, so in case of any non-desired intervention, the central electronic unit gives a locking order to the electric motor.

One of the drawbacks of this known prevention system is that the control of the protection is operated from the inductive sensor of the device for interlocking the lever of the gear-box, which lever is placed in the passenger cabin. This, apart from being placed in the passenger cabin, so being exposed to attacks and manipulations, is locked by a mechanical locking device, the number combination of which defines the efficiency of the safety of protection. On the other hand, the efficiency of this solution depends maximally on the instructions of the driver, if after the stopping of the vehicle, either because of absentmindedness, or because the driver was disturbed, his attention was being kept and so he hasn't closed the lock mechanically, the vehicle can remain without protection.

Another solution of EP 1 642 791 A1 is that when locking the lock device of the gear lever of the motorcar, the signal coming from the inductive sensor generates the order for the central electronic unit for which the prevention system closes, that is, actuates. Since the signal of the inductive sensor isn't controlled by anything, it gives instructions to the central electronic unit even in case of an error, which - if occurs during the operation of the engine of the motorcar -, can even cause an accident, because of the unintentional switching-on of the prevention system, the gear lever and the clutch structure also becomes unusable.

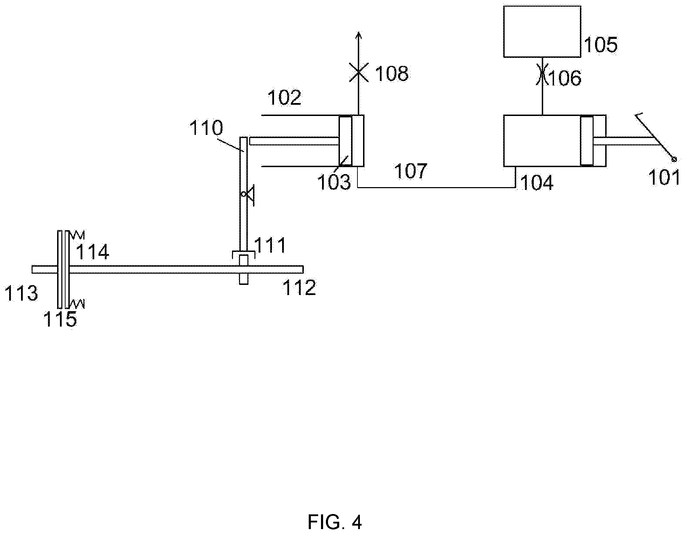

A further solution of EP 1 642 791 A1 is that the support 93 shaft of the clutch deactivating pressure-reducing piston 22 is in direct relation with the transmission shaft 73 of the electromotor drive via excenter pin 92 as shown in Fig. 4, said shaft 93 is thereby loaded by a perpendicular pressure whenever the clutch is used. The extent of this pressure depends on the performance of the given vehicle. The force exerted this way can reach 7-8000 N even at vehicles of the smallest performance, which exposes the transmission shaft 73 as well as the excenter pin 92 to an increased strain.

The objective of the invention is to find solution during the operation of the vehicle for the technical problems deriving from the above described prevention system by eliminating the weaknesses thereof, particularly for making impossible the illegitimate deactivation of the prevention system from the passenger cabin, meanwhile the occurrent absentmindedness of the legitimate user of the vehicle shouldn't ruin the efficacy of the protection.

One of the main and essential features of the present invention is that the prevention system automatically switches on when stopping the engine of the motorcar and under the built-in operational conditions, so excluding the human factor from among the switch-on conditions of the prevention system. The closure of the gear-box lock is not carried out at the gear lever in the passenger cabin, but simultaneously with the interlocking of the lock of the engine compartment used as part of the protection, at the links operating the linkage of the gear-box placed in the engine compartment. Thereby it is not necessary to operate the present prevention system by a mechanical locking device. The interlocking below the engine hood is much safer, since the accessibility is thereby completely excluded.

Another advantage of the present invention is that after stopping the engine of the motorcar, the automatic switch-on of the prevention system is bound to some conditions in order not to be active for an erroneous engine-stopping signal. The stopping of the engine of the vehicle is reached through switching-off the ignition switch. This signal is forwarded to the control processor only if two other conditions are also met. The first one is a signal coming from a charge sensor, which is correct when the voltage of the battery is between 12-12,5 V. This indicates that the engine of the vehicle has actually been stopped, the charging of the battery ceased. At running engines this value is about min. 14 V. The other condition is a signal coming from a vibration sensor, which is correct if the sensor does not sense any vibration, this can also be accomplished only when the engine is stopped. Thereby enacting instructions only get to the control processor from the unit controlling the switch-on conditions of the protection, if all the three preceding conditions are fulfilled. Hence the erroneous switching-on of the prevention system - for e.g. a cancel signal from the ignition switch, which can be triggered even by a line break - can be hindered.

In view of the above, proceeding from a prevention system against motorcar-theft of a motorcar with manual transmission, for installation subsequently to the production of the motorcar, which system comprises an ignition switch supplied by a battery of the motorcar and a central electronic unit provided with a control processor as well as a drive unit with an electric motor controlled by the central electronic unit, wherein said drive unit comprises an electric motor, a transmission, a shaft of trapezoidal thread and a bowden-cable mover adapted to move between an open position and closed position of the drive unit, and the system further comprises a hydraulic pressure-reducing unit operated by the drive unit for deactivating the clutch, and interlocking units for interlocking the lock of the engine compartment, the hydraulics, the gear-box and optionally the lock of the luggage compartment, which are connected to the drive unit via the bowden-cable mover and interlocking-control bowden-cables; the objective is fulfilled according to the present invention by providing a prevention system in which the drive unit, which is automatically switched on when the engine of the motorcar is stopped, maintains an interlocked protection state even when the battery is completely depleted, said drive unit is associated with a control unit for controlling the switch-on conditions of the protection, said switch-on conditions including the switched-off state of the ignition switch, a signal of a charge sensor on a charge-free state of the battery, and a signal of a vibration sensor on a vibration-free state of the motorcar, wherein the interlocking unit of the gear-box is arranged near the linkage of the gear-box, and the pressure-reducing unit is provided with a means for limiting the pressure generated behind the piston of the clutch cylinder.

The preferred embodiments of the invention are defined in the dependent claims.

The invention relating to the embodiments will be described in more detail on the basis of the attached drawing in which
- Figure 1: shows the block diagram of the prevention system of the present invention,
- Figure 2: illustrates the schematic construction and operation of the prevention system of the present invention,
- Figure 3: is the schematic view of the construction and operation of the drive unit with electric motor as part of the prevention system of the present invention,
- Figure 4: is a schematic view of the general operation of a motorcar,
- Figure 5: is a schematic view of a preferred embodiment in the protection configuration of the hydraulic system,
- Figure 6a and 6b: is a schematic view of another preferred embodiment in the protection configuration of the hydraulic system, in operational and in rest state,
- Figure 7a and 7b: depicts the theoretical sketch of the interlocking of the linkage of the gear-box in two different embodiments,
- Figure 8a and 8b: is the theoretical sketch of the interlocking of the lock of the engine compartment in two different embodiments,
- Figure 9a and 9b: is the schematic operational view of a preferred solution of the mechanical interlocking unit of the prevention system in two different operational states,
- Figure 10a and 10b: is the schematic operational view of another preferred solution of the mechanical interlocking unit of the prevention system in two different operational states, and
- Figure 11: depicts the block diagram of the electric control of the prevention system.

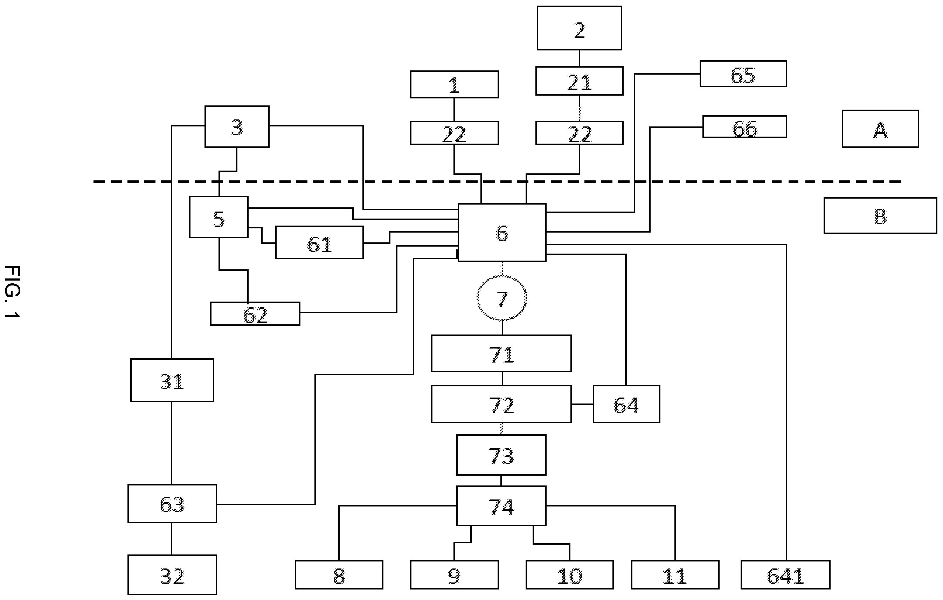

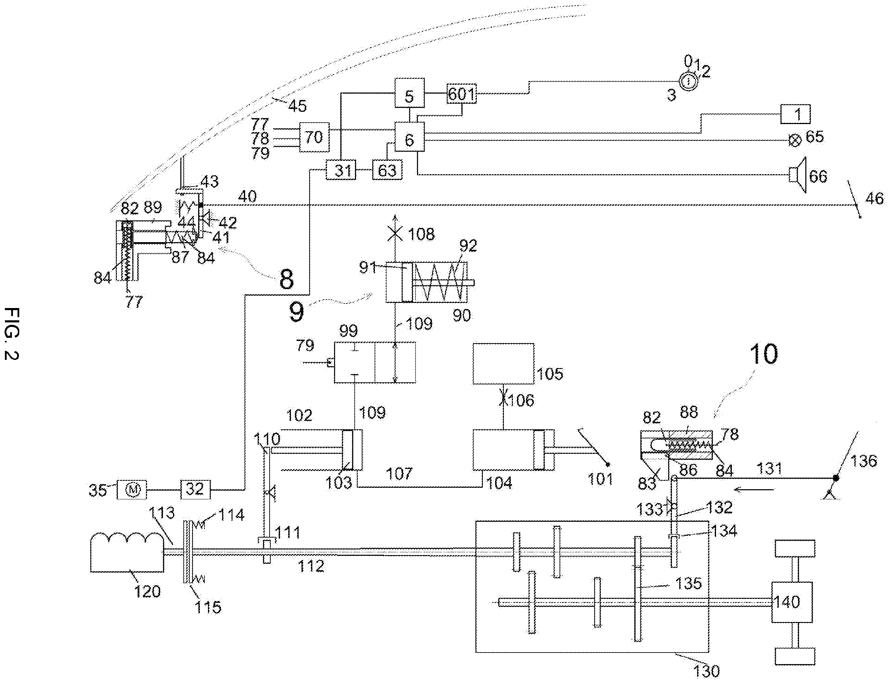

The relationship between the prevention system against motorcar-theft of the present invention and the motorcar, as well as the construction and operation of the elements taking part in the operation is shown in Figures 1 and 2.

The main elements needed for the operation of the motorcar are as follows:
The voltage supply needed for starting the motorcar for fulfilling its various functions and for activating the prevention system is provided by the battery 5, which is located in the engine compartment B. The elements for starting the motorcar, namely the self-starter control 31, the self-starter relay 32 and the self-starter 35 are also found here, which are brought into operation by activating the ignition switch 3 arranged in the passenger cabin A of the motorcar. Another determining factor of the operation of the motorcar is the drive train, the chief parts of which are: the engine 120 of the vehicle, the clutch disc 115, the gear-box 130 and the driven wheels 140. Also essential elements of the operation are the clutch pedal 101 and the gear lever 136, which are both controls located in the passenger cabin A as is the ignition switch 3.

For starting the engine 120 of the vehicle the gear lever 136 is displaced - as is shown in Figure 2 - such that the linkage 132 of the gear-box will disconnect the reverse gear transmission 135 in the gear-box 130 by means of actuating the gear shift fork 134 through the gearshift rod or bowden-cable 131. Then with the usage of the ignition switch 3 by means of the voltage supply provided by the battery 5, the self-starter control 31 which is operated by the ignition switch 3 switches on the self-starter relay 32, thereby transmitting voltage to the self-starter 35, by the rotation of which the vehicle can get started.

In order to change the gearshift connections of the gear-box 130 among the forward and reverse running and the neutral position, the hydraulic system must be used by pushing and releasing the clutch pedal 101, as is shown in Figure 4.

The controls, as mentioned earlier, can be found in the passenger cabin A of the motorcar together with the engine compartment opening bracket 46, all the other elements taking part in the operation of the vehicle and applied for car thefts are, however, located under the engine hood 45.

As a prevention system against motorcar-theft, for hindering the opening of the engine hood 45 the interlocking unit 8 of the lock of the engine compartment is used, which precludes that illegitimate persons get access to the units belonging to the operation of the vehicle and its control and located in the engine compartment B as well as to further elements applied for the anti-theft system. Said further elements comprise among others the interlocking unit 9 of the hydraulics, which is made complete with a shut-off valve 99; the interlocking unit 10 of the linkage of the gear-box, which is optionally configured with a lock rail 83 turning out from a rail house 88; the self-starting prohibitor (63); and other units built in for operating the interlocking units, such as the central electronic unit 6, the charge sensor 61, the vibration sensor 62, the electric motor 7, the drive unit 70 with said electric motor, the transmission 71, the bowden-cable mover 73, the interlocking-control bowden-cable 76 of the lock of the luggage compartment, the interlocking-control bowden-cable 77 of the lock of the engine compartment, the interlocking-control bowden-cable 78 of the linkage of the gear-box, and the valve-control bowden-cable 79 of the hydraulics.

In addition to the anti-theft system, the sound signal 65 and the light signal 66 giving information about the state of the protection and its operation are arranged in the passenger cabin A. The card-reader 1 controlling the switching-off of the protection and the unique coding unit 22 transferring the signal of the card-reader to the central electronic unit 6 are also located in the passenger cabin A.

The essence of the operation of the anti-theft prevention system is that after stopping of the engine of the vehicle and putting the gear-box into the reverse position, the prevention system switches every interlocking unit automatically on, independently of the driver of the vehicle, such that the vehicle couldn't be displaced either by means of its own engine or by towing it away, as the gear-box put into gear and the interlocking of the clutch system don't make it possible; further the thereby interlocked drive couldn't be accessible through the also interlocked engine compartment and it shall keep this protection state for an indefinite period of time even when the battery is depleted.

One of the preferred solutions of the prevention system of the present invention is the drive unit 70 with electric motor, which automatically switches on when stopping the engine of the vehicle, and which is a relevant element of the protection.

A significant problem of the prevention systems working completely electronically is that they are dependent on the voltage level of the battery of the vehicle. If the voltage level of a motorcar, that hasn't been used for a longer time, reduces to 75%, then the prevention system becomes unworkable and cannot function.

This deficiency is eliminated, as another preferred solution, by the drive unit 70 with electric motor such that its protective position cannot be cancelled through the transmission of the drive unit 70 against the direct current motor which is excited by a permanent magnet. Since the efficiency of a solely electronic prevention systems decreases to zero after the depletion of the battery, as a solution of the present invention, the already closed prevention system ensures the protection of the motorcar for an indefinite period even after the depletion of the battery via the locks switched on by the drive unit 70.

In case of completely depleted motorcar battery, if the battery 5 has been located in the engine compartment B of the motorcar, there's no possibility to access the battery 5, as the interlocking unit 8 of the lock of the engine compartment doesn't allow it. In this case the passenger cabin A of the motorcar is opened mechanically by the key of the motorcar, then the connector of the cigar-lighter, which was provided as an original part of the motorcar in the passenger cabin is supplied from an outer power-supply, e.g. from the battery of another motorcar.

The person who can legally use the motorcar instructs the control processor 60 associated with the drive unit 70 with electric motor by means of the card-reader 1 and the Bluetooth system 2, said control processor in turn gives voltage to the electric motor 7 what causes opening direction movement. The electric motor 7 then shifts a bowden-cable mover 73 into the open X position of the drive unit. By means of the interlocking-control bowden-cables 77, 79, 78 and 76 the bowden-cable mover 73 operates the interlocking unit of the lock of the engine compartment, the interlocking unit of the hydraulics 9, the interlocking unit of the linkage of the gear-box 10 and the interlocking unit of the luggage compartment, which all release the mechanical prevention of the usage of the motorcar. This way the engine compartment of the motorcar becomes openable and accessible for charging or replacing the battery 5.

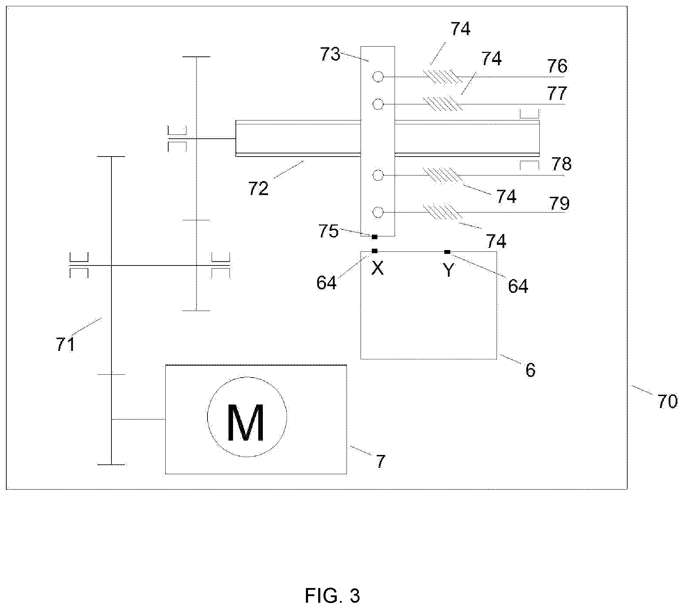

The operation of the drive unit 70 as part of the prevention system is shown in Figures 1 and 3.

Stopping the engine 120 of the vehicle by turning the ignition switch 3 off, if the switch-on conditions of the protection are fulfilled - which are controlled by a unit 601 and to which in addition to the turning off the ignition switch 3, the charge-free state of the battery 5 and the vibration-free state of the motorcar belong - the control processor 60 gives voltage to the electric motor 7 what causes closing direction movement, the electric motor 7, as shown in Figure 3, rotates a shaft 72 of trapezoidal thread via a transmission 71, said shaft moves the bowden-cable mover 73 to the closed position Y of the drive unit 70. The precise position of the bowden-cable mover is given by two position-sensor magnets 64 and a positioning magnet 75, both of which are associated with the central electronic unit 6. The interlocking-control bowden-cable 76 of the lock of the luggage compartment, the interlocking-control bowden-cable 77 of the lock of the engine compartment, the interlocking-control bowden-cable 78 of the linkage of the gear-box and the valve-control bowden-cable 79 of the hydraulics are connected to the bowden-cable mover 73 one beside the other, via spring-type force accumulators 74. The bowden-cable mover 73 operates the interlocking unit 8 of the lock of the engine compartment, the interlocking unit 9 of the hydraulics, the interlocking unit 10 of the linkage of the gear-box and the interlocking unit 11 of the lock of the luggage compartment through said interlocking-control bowden-cables 77, 79, 78, 76, thereby it mechanically prevents the illegal usage of the motorcar at several points.

Before the use of the motorcar, the legitimate person gives instructions to the control processor 60 by means of the card-reader 1 and the Bluetooth system 2 to send voltage to the electric motor 7 what causes opening direction movement. The electric motor 7 then displaces the bowden-cable mover 73 to the open position X of the drive unit. The bowden-cable mover 73 operates the interlocking unit 8 of the lock of the engine compartment, the interlocking unit 9 of the hydraulics, the interlocking unit 10 of the linkage of the gear-box and the interlocking unit 11 of the lock of the luggage compartment through the interlocking-control bowden-cables 77, 79, 78, 76, said interlocking units release the mechanical prevention of the usage of the motorcar, so the motorcar becomes usable. The role of the spring-type force accumulatorS 74 is to prevent the damage of the electric motor 7 of the drive unit if one of the bowden-cable moved locks should get stuck while switching off.

Figure 4 illustrates the general operation of a hydraulic clutch used in motorcars.

The main elements of the hydraulic system are the clutch pedal 101, the clutch pedal cylinder 104, the hydraulic oil container 105, arranged among them a choked hydraulic tube 106, the clutch cylinder 102, the piston 103 of the clutch cylinder, a hydraulic tube 107 and an air-bleeder valve 108. The hydraulic oil container ensures the oil quantity necessary for the operation of the system.

The power-transmission between the crankshaft 113 of the engine of the motorcar and the gear spindle 112 of the gear-box is carried out via the clutch discs 115 by means of clutch disc clamping springs 114. Changing between the various speeds can be fulfilled after the separation of the clutch discs 115. The separation of the clutch discs 115 can be accomplished by means of an uncoupling fork 111 operated by a clutch lever 110 against the clutch disc clamping springs 114. By pressing the clutch pedal 110 the hydraulic oil is pressed from the clutch pedal cylinder 104 into the clutch cylinder 102 through the hydraulic tube 107. Under oil pressure the piston 103 of the clutch cylinder moves and via the uncoupling fork 111, which is operated by the clutch lever 110, it separates the clutch discs 115 against the clutch disc clamping springs 114. Then the due gears become engageable and after selecting the right speed, by letting up the clutch pedal 101, the clutch disc clamping springs 114 compress the clutch discs 115. Then the uncoupling fork 111 moves the piston 103 of the clutch cylinder through the clutch lever 110 into the opposite direction. At this point, the hydraulic oil pushes back the clutch pedal 101 of the clutch pedal cylinder 104 to the base position.

According to the solution of EP 1 642 791 A1, approximately 8000 N load is exerted on the transmission shaft and the excenter pin of the drive unit with electric motor when pushing the clutch pedal. At the same time, when the clutch pedal is pushed in the instant when the lock of the gear-box locked in the passenger cabin is opened, the gear ring of the drive unit and the worm-wheel of the crankshaft can be blocked. Since the output performance of the motor of the drive unit is max. 40 W, the motor cannot overcome the force of around 8000 N.

Two preferred embodiments of the present invention provides solution for the above-depicted operational problems of EP 1 642 791 A1.

For, the other characterizing feature of the present invention - and an essential difference with respect to EP 1 642 792 - is that, as a preferred solution of the prevention system, in the circuit for reducing the hydraulic pressure a means is applied, which is operated by the bowden-cable moved by the drive unit 70 or directly by the electric motor 7, said means limits the pressure generated behind the piston of the clutch cylinder. Thereby at the closed position of the valve no pressure evolved in the hydraulics system is exerted on the shaft of the motor, since the opening and closing of the valve is not done under pressure. The present solution lessens the increased mechanical load deriving from the operation of the protection, and so minimizes the possibility of its failure, hence enhances its reliability.

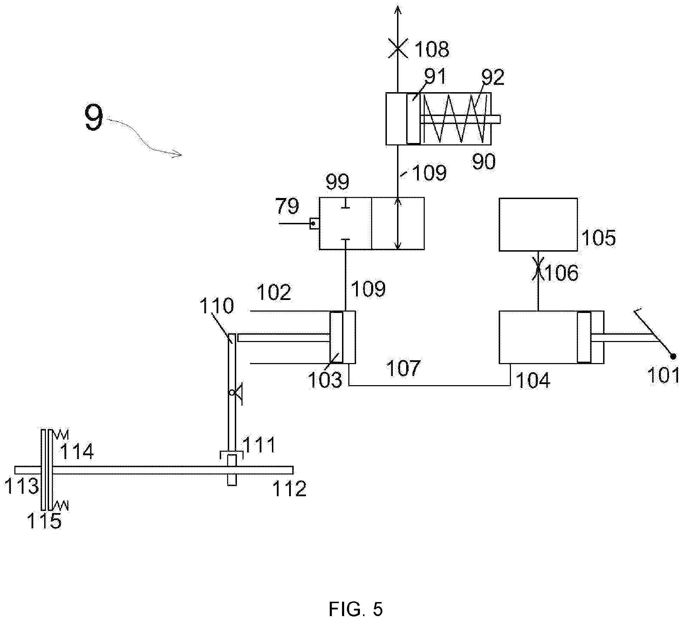

Figures 2 and 5 illustrates the construction and operation of a preferred embodiment of the inventive solution applied in the pressure-reducing unit of the clutch-deactivator of the prevention system of the present invention.

In the interlocking unit 9 of the hydraulics a shut-off valve 99 is connected as a pressure-limiting means in the place of the air-bleeder valve 108 of the clutch cylinder 102 shown in Figure 4 through a hydraulic tube 109, said shut-off valve is in closed position during the operation of the vehicle. When the engine 120 of the vehicle has been stopped and other conditions have also been fulfilled, then the shut-off valve 99 opens by means of the valve-control bowden-cable 79 of the hydraulics due to the shift of the drive unit 70, and the passage of the hydraulic oil is provided through a further hydraulic tube 109 into the pressure-reducing unit 90. In this case, by pushing the clutch pedal 101 the hydraulic oil flowing through the open shut-off valve 99 shifts the pressure-reducing piston 91 of the pressure-reducing unit 90 against a resetting spring 92. Since the force exerted by the clutch disc clamping springs 114 is much higher than that of the resetting spring 92, there cannot evolve sufficient pressure at the piston 103 of the clutch cylinder to displace the piston 103 of the clutch cylinder. Thus the separation of the clutch discs 115 is not possible, which is another important element of the vehicle protection, since because of the gear-box 130 interlocked in the reverse position, the clamped clutch discs 115 and the stopped car engine, the vehicle cannot be moved on its own wheels. The resetting spring 92 also fulfils the task of preventing the exertion of the force needed to press the clutch disc clamping springs 114 even by repeatedly pressing on the clutch pedal 101 after the switching-on of the prevention system, since when letting up the clutch pedal 101, the resetting spring 92 always pushes back the pressure-reducing piston 91 to the base position, which then presses the hydraulic oil back to the cylinder of the clutch pedal 104. When repeatedly pressing the clutch pedal 101 it is again the pressure-reducing piston 91 that moves. The air-bleeder valve 108 of the clutch cylinder 102 is then reasonably built in the pressure-reducing unit 90, since that became the farthest point in the hydraulic system.

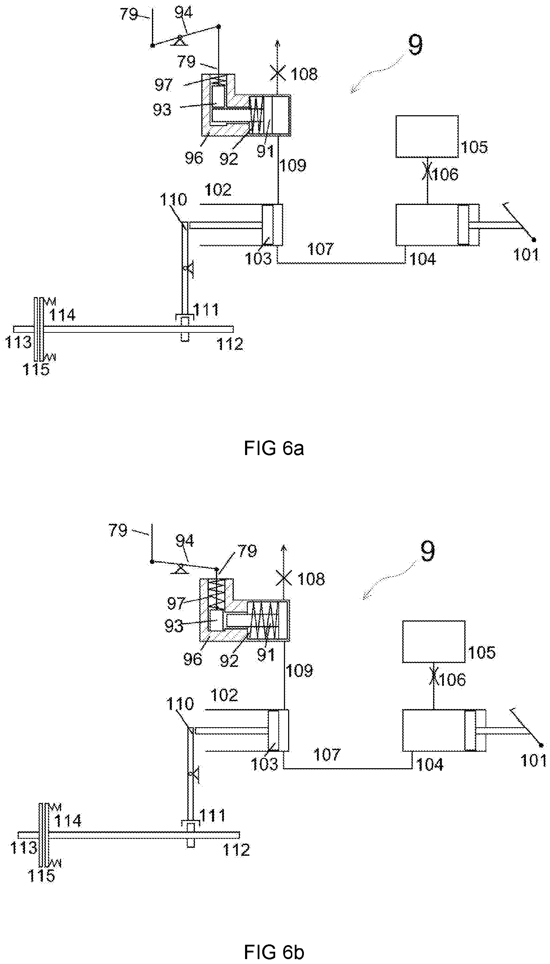

The construction and operation of the other preferred embodiment of the invention applied at the pressure-reducing unit is shown in Figures 6a and 6b.

In the interlocking unit 9 of the hydraulics, instead of the air-bleeder valve 108, as shown in Figure 4, a pressure-reducing unit 96 is connected through the hydraulic tube 109. After stopping the engine 120 of the vehicle, the electric motor 7 of the drive unit 70 as it can be seen in Figure 3, to the instruction of the control processor 60 displaces the bowden-cable mover 73 through the transmission 71 to the closed position Y of the drive unit. Figure 6a illustrates that by means of the valve-control bowden-cable 79 of the hydraulics, via a turner 94 as pressure-reducing means an interlocking rod 93 is rotated against a compression spring 97, thereby ceasing the former limitation of the movement of the pressure-reducing piston 91 as shown in Figure 6b. By pressing the clutch pedal 101 the hydraulic oil flows from the clutch pedal cylinder 104 through the clutch cylinder 102 to the pressure-reducing unit 96. The hydraulic oil moves the pressure-reducing piston 91 against the resetting spring 92, so the piston 103 of the clutch cylinder 102 cannot move because of the forces exerted by the clutch disc clamping springs 114, since the oil quantity ensured by the pressing of the clutch pedal 101 fills only part of the volume of the pressure-reducing unit 96. Moreover, the force exerted by the resetting spring 92 is much smaller than the force exerted by the clutch disc clamping springs 114, hence the oil pressure generated by the clutch pedal 101 displaces the pressure-reducing piston 91 against the resetting spring 92, so the separation of the clutch discs 115 is not possible.

If to the opening instruction of the card-reader 1 or of the Bluetooth system 2 the control processor 60 gives an opening order to the drive unit 70, then the bowden-cable mover 73 shifts from the closed position Y to the open position X of the drive unit. The valve-control bowden-cable 79 of the hydraulics pushes the interlocking rod 93 in front of the pressure-reducing piston 91 by the bowden-cable mover 73- by means of the turner 94 and the compression spring 97 -, which is in its base position as shown in Figure 6a. Thereby it prevents the displacement of the pressure-reducing piston 91 in case of pressing the clutch pedal 101, so the piston 103 of the clutch cylinder 102 moves due to the generated pressure against the clutch disc clamping springs 114, and it separates the clutch discs 115 with the uncoupling fork 111. Since the bowden-cable mover 73 stands in the open position X of the drive unit, the hindrance of the movement of the linkage of the gear-box 132 also ends, that is, the gear lever 136 can be put out of R reverse position, or in case of vehicles with automatic gear-boxes out of P position, and the engine of the vehicle can be started.

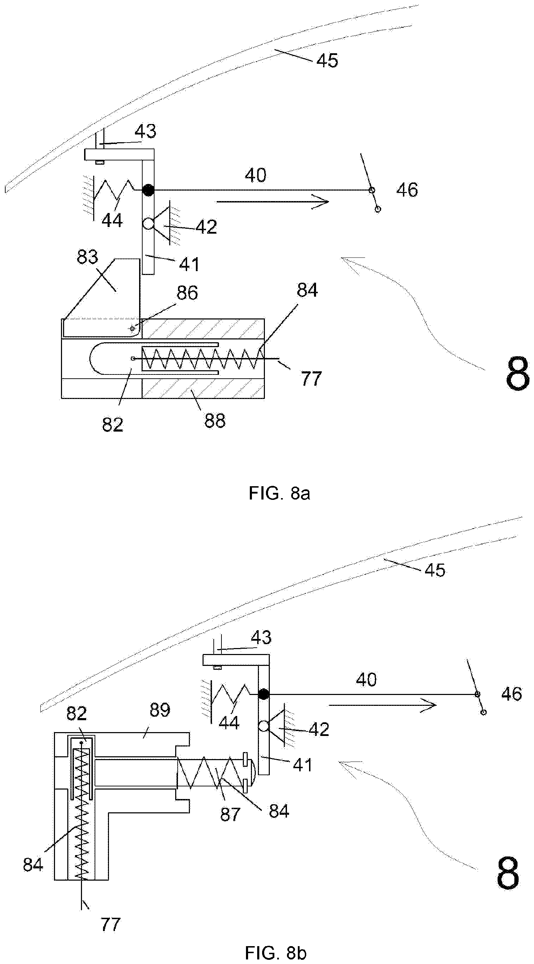

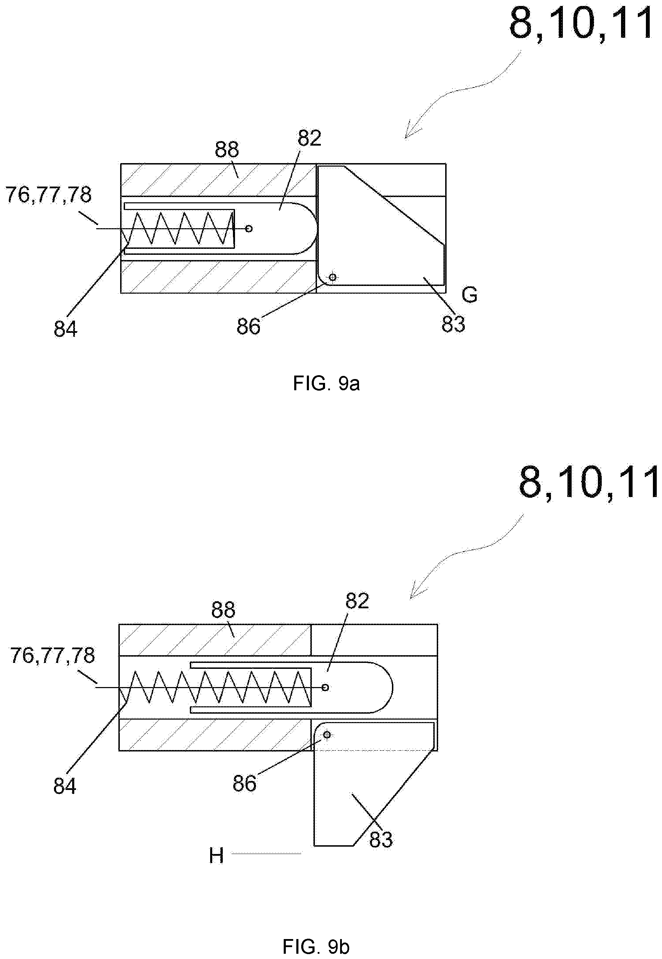

An embodiment of the mechanical interlocking units of the prevention system is depicted in Figures 8a and 8b, applied at the interlocking of the engine compartment A by the lock clevis 41 and the at the interlocking of the linkage of the gear-box 132, and enlarged in Figures 9a and 9b.

As illustrated in figure 8a, the lock clevis 41 is mounted on the engine hood 45 via a lock tab 43, said lock clevis can be moved by an engine compartment lock opener 40 connected to an engine compartment opening bracket 46 about a pivot point 42 against the force of a retracting spring 44. For preventing the opening of the engine hood 45 through the engine compartment opening bracket 46, an interlocking unit 8 for the engine compartment is provided, which comprises a lock rail 83 turning out about a lock rail axe and a rail house 88 from which the lock rail turns out. In the hole of the rail house a guiding shaft 82 is located the movement of which is operated by the interlocking-control bowden-cable of the lock of the engine compartment 77 by means of a compression spring 84. The guiding shaft 82 directly acts on the turning out lock rail 83, which in the position H of the mechanical lock, as can be seen in Figure 9b, prevents e.g. the opening of the engine hood 45 of the vehicle, since the lock rail 83 in the turned-out position hinders the movement of the lock clevis 41. Thereby the engine compartment opening bracket 46 cannot be operated, because the turned-out lock rail 83 prevents it.

When swithing-on (i.e. closing) the prevention system the bowden-cable mover 73 of the drive unit 70 moves from the open X position from the closed Y position of the drive unit. This time the interlocking-control bowden-cable 77 of the lock of the engine compartment moves and the guiding shaft 82 follows the movement thereof. The guiding shaft 82 pushes the turning-out lock rail 83 in front of itself due to the force of the compression spring 84 and the guiding shaft rotates the lock rail from the open position G to the closed position H of the mechanical lock. In the swithced-on state of the protection the bowden-cable mover 73 remains long in the closed position Y of the drive unit, consequently the valve-control bowden-cable 77 of the lock of the engine compartment and the compression spring 84 hold the guiding shaft 82 in front of the turning-out lock rail 83, hence the interlocking exists as long as the drive unit 70 shifts the bowden-cable mover 73 to the closed position X of the drive unit to the instruction of the control processor 60. In this case the interlocking-control bowden-cable 77 of the lock of the engine compartment moves to the opposite direction, and displaces the guiding shaft 82 against the compression spring 82. So resolves the interlocked position of the turning-out lock rail 83. Then if the engine compartment opening bracket 46 is pulled, the lock tab 43 can be moved by means of the engine compartment opening bowden-cable 40, so the engine hood opens.

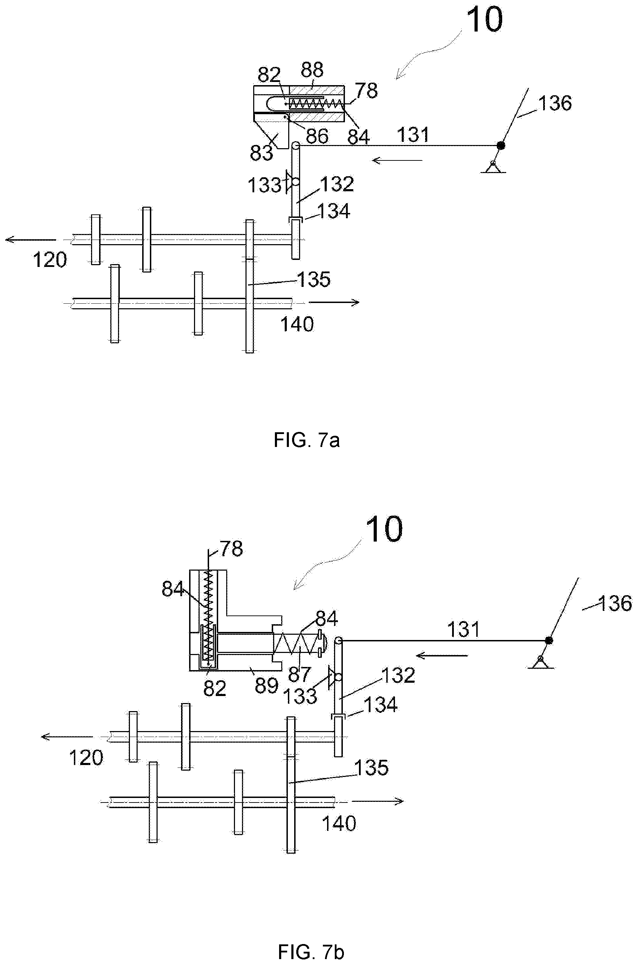

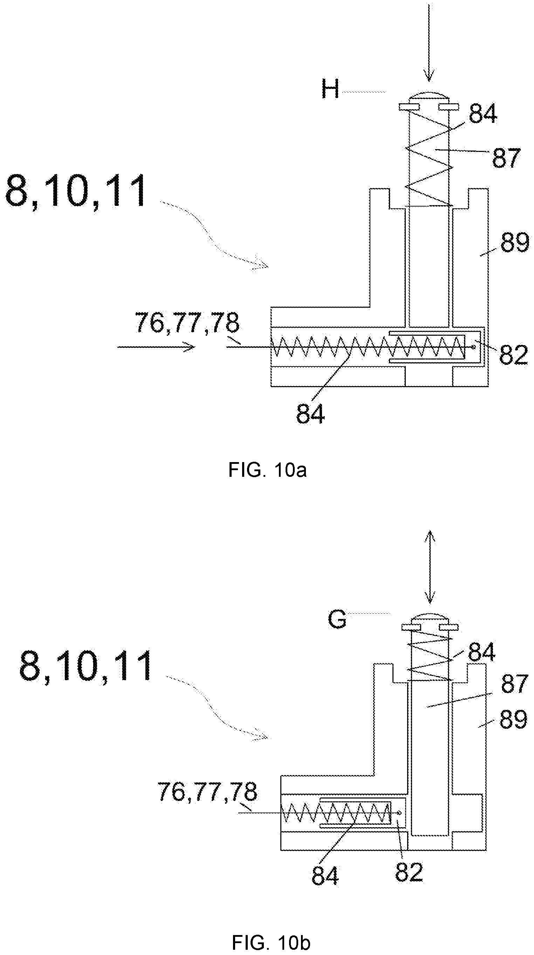

Another preferred embodiment of the mechanical lock applied as part of the prevention system is shown in Figures 7b and 8b, used at the interlocking of the linkage of the gear-box 132 and at the interlocking of the lock of the engine compartment by the lock clevis 41, as well as shown enlarged in Figures 10a and 10b.

As is shown in Figure 7b, a possible embodiment of the interlocking unit serving for the prevention of the movement of the gear lever 136 comprises an interlocking shaft house 89 in which two holes perpendicular to one another are formed. In one of the holes an interlocking shaft 87 moves against a compression spring 84. In the hole perpendicular to the interlocking shaft 87 a guiding shaft 82 moves, which prevents or allows the motion of the interlocking shaft 87. The interlocking shaft 87 is in indirect communication e.g. with the linkage of the gear-box 132 rotating around link shaft 133 and follows its movement between the open position G and the closed position H of the mechanical lock, as it is illustrated in Figures 10a and 10b. When switching-on (i.e. closing) the prevention system the bowden-cable mover 73 of the drive unit 70 shifts from the open position X to the closed position Y of the drive unit. The guiding shaft 82 through the interlocking-control bowden-cable 78 of the linkage of the gear-box due to the force of the compression spring 84 displaces, such that it hinders the motion of the interlocking shaft 87. Since the interlocking shaft 87 follows the motion of the linkage 132 of the gear-box, it prevents the gear lever 136 to be moved from reverse position by means of the gearshift rod or cable 131.

If to the opening instruction of the card-reader 1 or of the Bluetooth system 2, the control processor 60 gives an opening order to the drive unit 70, then the bowden-cable mover 73 shifts from the closed position Y to the open position X of the drive unit. Then the bowden-cable mover 73 together with the interlocking-control bowden-cable 78 of the linkage of the gear-box displaces the guiding shaft 82 such that the movement of the interlocking shaft 87 becomes free. Thereby the prevention of the movement of the linkage of the gear-box comes to an end and the gear lever 136 can be put out of R reverse position, or in case of vehicles with automatic gear-boxes out of P position.

As a further possible solution, the moving and the operation of the guiding shaft 82 of the interlocking units 8, 10, 11 (Figures 7-10.) and the interlocking rod 93 (Figure 6) or shut-off valve 99 (Figure 5) applied in the hydraulic system can also be accomplished through a direct motoric drive, which is controlled by the central electronic unit 6 via the control processor 60.

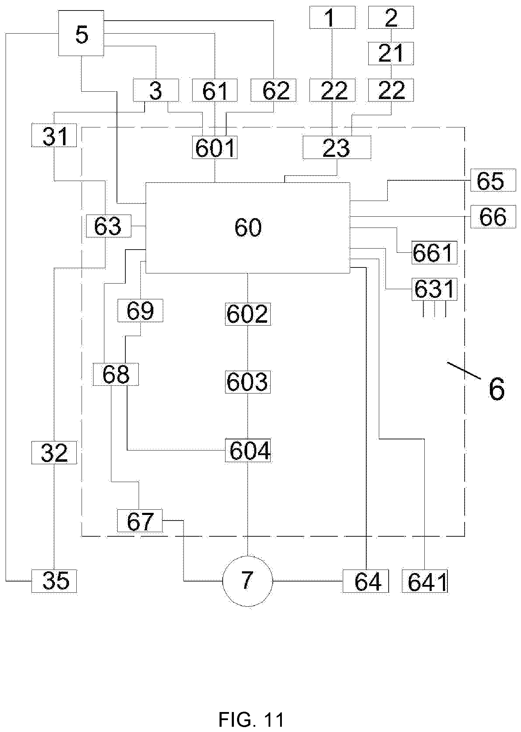

The electric control of the invention will now be described through the block diagram of Figure 11.

A dominantly preferred solution of the control is that the switching-on of the prevention system can automatically be initiated by stopping the engine 120 of the vehicle. Besides the turning-off of the ignition switch 3 of the motorcar, the registration of the value measured by the charge sensor 61 of the battery 5 (a value between 12-12,5 V indicates the cease of the charging), as well as the signal coming from the vibration sensor 62 (which also indicates the stopping of the engine of the motorcar), jointly form the automatic switch-on conditions of the prevention system. If the unit 601 controlling the switch-on conditions of the protection senses the existence of all the conditions, it initiates the closing process to the instruction of the control processor 60 of the central electronic unit 6. It first switches on the sound signal 65 and light signal 66 arranged in the passenger cabin, which indicate intermittently that the closing process has been started. It warns the driver of the motorcar of e.g. the gear-box 130 of a motorcar with mechanical gear-box should be put into the reverse R position (into the P position at automatic gear box, respectively), and if he holds the clutch pedal 101 pushed, then this should be let back to base position. The control processor 60 of the central electronic unit 6 gives voltage of predetermined time to the electric motor 7, what causes closing direction movement, after the delay of a timer circuit 602 through a circuit 603 of performance degree and safety and through an overcurrent protection 604. A position sensor 64 gives information about the displacement of the electric motor 7. If said position sensor 64 sends a piece of information towards the control processor 60 according to which the drive unit 70 via the electric motor 7 has fulfilled the task, then the sound signal 65 ends within the time determined by the timer circuit 602. The light sensor 66 is on till the prevention system is being switched-on.

In case the position sensor 64 does not indicate back the instruction given by the control processor 60 on the task done by the electric motor 7, then the control processor 60 through the sound signal 65 and light signal 66 informs the driver of the motorcar with a changed - faster pace - frequency so that the driver can check which outer reason or activity has caused the problem. A similar indication is made when the overcurrent protection in the circuit of the electric motor 7 senses an amperage that is permanent and higher than allowable. After sensing an overcurrent due to blockage or to other reasons, an electric motor circuit inhibitor 68 switches off the voltage of the electric motor 7 to the instruction of the control processor 60. Subsequently, for the repeated closing instruction from the driver a reversing circuit 69 moves the electric motor 7 to the opposite direction, thereby the blocked drive unit 70 releases itself.

Simultaneously with the closing instruction, the control processor 60 also activates the self-starting prohibitor 63 and the occurrent supplementary electric prohibitor. This time the signal from the ignition switch 3 cannot get to the self-starter relay 32 through the self-starter control 31 because of the switched-off self-starter prohibitor 63, so the self-starter motor 35 of the motorcar cannot be operated.

A preferred solution of the switching-off of the prevention system can be carried out by the card-reader 1 of RFID-system arranged behind the cover of the dashboard in the passenger cabin A. A passive, transponder card is held in front of the card reader 1, which reads the card, and transmits the obtained signal to the control processor 60 through the unique coding unit 22. Then the control processor 60 gives instruction to the electric motor 7 for fulfilling the closing process through the timer circuit 602 - in this case the time of which is 0 second -, through the circuit of performance and safety 603 and through the circuit of the overcurrent protection 604 in the same way as described in the process of closing. When the position sensor 64 verifies the fulfilment of the task, then the flashing light signal 66 ceases.

Simultaneously the control processor 60 also deactivates the self-starting prohibitor 63 and the supplementary electric prohibitor 631, thereby the motorcar can operate the self-starter 35 with the self-starter control 31 switched by the ignition switch 3, through the switched-off self-starting prohibitor 63 and the self-starter relay 32, so the engine 120 of the vehicle can be started.

Controlling through the Bluetooth system 2 of the mobile phone is the other preferred solution for switching on and off the prevention system.

As the first step of the Bluetooth system 2, using the keyboard 21 with the PIN codes supplied through the coding unit 22, that/those telephone(s) can be coupled from which the prevention system of the motorcar is to be controlled. After the stopping of the engine 120 of the vehicle if the switch-on conditions checked by the unit 601 are fulfilled and getting out of the car, we go away from the motorcar or we switch off the application of the Bluetooth system 2 on the telephone, so the connection breaks off between the telephone and the motorcar, then the control processor 60 gives a closure instruction to the electric motor 7. The protection then switches off according to the closing process, the same way as described in the previous preferred solution.

The switching off of the prevention system can be performed as follows: we approach the motorcar to about 2-3 meters with the Bluetooth system 2 of the telephone switched on, the Bluetooth system 2 of the motorcar senses the coupled telephone, then the control processor 60 sends an opening instruction to the electric motor 7, and the prevention system switches off according to the process described above.

If the telephone has been damaged or lost, the closing/opening instruction to the control processor 60 can also be sent by using the keyboard 21 typing in the PIN code.

As a further preferred solution, the electric control of the prevention system can be supplied with lock position sensors 641, which can be applied at the places secured by the interlocking units 8, 9, 10, 11. The signals of the lock position sensors give information to the control processor 60, which then gives information to the driver of the motorcar through the sound signals 65 and light signals 66 on whether the interlocking needed for the prevention system has been accomplished or not. At the same time, the control processor 60 provides the alarm and GPS control 661 with direct information if in case of switched-on protection the interlocking system of the motorcar would be affected by outer, intentional intervention.

As a lock position sensor either a micro switch, or a switch functioning on magnetic or optical principles can be applied, as the location to build-in allows it.

### List of Reference Signs

- A: passenger cabin
- B: engine compartment
- G: open position of mechanical lock
- H: closed position of mechanical lock
- X: open position of drive unit with electric motor
- Y: closed position of drive unit with electric motor

- 1: card reader
- 2: Bluetooth system
- 3: ignition switch
- 5: battery
- 6: central electronic unit
- 7: electric motor
- 8: interlocking unit (of lock of engine compartment)
- 9: interlocking unit (of hydraulics)
- 10: interlocking unit (of linkage of the gear-box)
- 11: interlocking unit (of luggage compartment)
- 21: keyboard
- 22: unique coding unit
- 23: sabotage protection
- 31: self-starter control
- 32: self-starter relay
- 35: self-starter
- 40: engine compartment opening bowden-cable
- 41: lock clevis
- 42: pivot point (of lock clevis)
- 43: lock tab
- 44: retracting spring
- 45: engine hood
- 46: engine compartment opening bracket
- 60: control processor
- 61: charge sensor
- 62: vibration sensor
- 63: self-starting prohibitor
- 64: position sensor
- 65: sound signal
- 66: light signal
- 67: electric motor blockage sensor
- 68: electric motor circuit inhibitor
- 69: electric motor reversing circuit
- 601: control unit for the switch-on conditions of the protection
- 602: timer circuit
- 603: circuit of performance degree and safety
- 604: overcurrent protection
- 631: supplementary electric prohibitor
- 661: alarm and GPS control
- 641: lock-position sensor
- 70: drive unit with electric motor
- 71: transmission
- 72: shaft of trapezoidal thread
- 73: bowden-cable mover
- 74: spring-type force accumulator
- 75: positioning magnet
- 76: interlocking-control bowden-cable (of lock of luggage compartment)
- 77: interlocking-control bowden-cable (of lock of engine compartment)
- 78: interlocking-control bowden-cable (oflinkage of gear-box)
- 79: interlocking-control bowden-cable (of hydraulics)
- 82: guiding shaft
- 83: (turning-out) lock rail
- 84: compression spring
- 86: lock rail axe
- 87: interlocking shaft
- 88: rail house
- 89: interlocking shaft house
- 90: pressure-reducing unit
- 91: pressure-reducing piston
- 92: resetting spring
- 93: interlocking rod
- 94: turner
- 96: pressure-reducing unit
- 97: compression spring
- 99: shut-off valve
- 101: clutch pedal
- 102: clutch cylinder
- 103: piston of clutch cylinder
- 104: clutch pedal cylinder
- 105: hydraulic oil container
- 106: tube (with choke)
- 107: hydraulic tube
- 108: air-bleeder valve
- 109: hydraulic tube
- 110: clutch lever
- 111: uncoupling fork
- 112: gear spindle of gear-box
- 113: crankshaft of the engine
- 114: clutch disc clamping springs
- 115: clutch disc
- 120: engine of the vehicle
- 130: gear-box
- 131: gearshift rod/cable
- 132: linkage of gear-box
- 133: link shaft
- 134: gearshift-fork
- 135: reverse gear transmission
- 136: gear lever
- 140: driven wheels

## Claims

1. Prevention system against motorcar-theft of a motorcar with manual transmission, for installation subsequently to the production of the motorcar, which system is adapted to adjust to the operation of the engine of the motorcar and to be active automatically, said system comprising an ignition switch (3) supplied by a battery (5) of the motorcar and a central electronic unit (6) provided with a control processor (60) as well as a drive unit (70) with an electric motor controlled by the central electronic unit (6), wherein said drive unit comprises an electric motor (7), a transmission (71), a shaft (72) of trapezoidal thread and a bowden-cable mover (73) adapted to move between an open position (X) and closed position (Y) of the drive unit (70), and the system further comprises a hydraulic pressure-reducing unit (90, 96) operated by the drive unit (70) for deactivating the clutch, and interlocking units (8, 10, 11, 9) for interlocking the lock of the engine compartment, the hydraulics, the gear-box and optionally the lock of the luggage compartment, which are connected to the drive unit (70) via the bowden-cable mover (73) and interlocking-control bowden-cables (76, 77, 78, 79), **characterized in that** the drive unit (70), which is automatically switched on when the engine (120) of the motorcar is stopped, maintains an interlocked protective state even when the battery (5) is completely depleted, said drive unit is associated with a control unit (601) for controlling the switch-on conditions of the protection, said switch-on conditions including the switched-off state of the ignition switch (3), a signal of a charge sensor (61) on a charge-free state of the battery (5), and a signal of a vibration sensor (62) on a vibration-free state of the motorcar, wherein the interlocking unit (78) of the gear-box is arranged near the linkage (132) of the gear-box, and the pressure-reducing unit (90, 96) is provided with a means for limiting the pressure generated behind the piston (103) of the clutch cylinder.

2. The prevention system according to claim 1, **characterized in that** the pressure-limiting means of the pressure-reducing unit (90) is a shut-off valve (99) arranged between the pressure-reducing unit (90) and the clutch cylinder (102) and operates in communication with the valve-control bowden-cable (79) of the hydraulics.

3. The prevention system according to claim 1, **characterized in that** the pressure-reducing unit (96) comprises, as a pressure-limiting means, an interlocking rod (93) provided with a compression spring (97) and adapted to control the desired values of the hydraulic pressure, wherein the interlocking rod is arranged perpendicular by the axis of the pressure-reducing piston (91) and operates in communication with the valve-actuating bowden-cable (79) of the hydraulics.

4. The prevention system according to any of claims 1-3, **characterized in that** for interlocking the locked engine hood (45), or for preventing the moving of the linkage (132) of the gear-box through the gear lever (136), or optionally for interlocking the lock of the luggage compartment the interlocking unit (8, 10, 11) comprises a guiding shaft (82) biassed with a compression spring (84) and preventing the movement of a lock rail (83) turning out from a lock rail-house (88), said guiding shaft being connected to the interlocking-control bowden-cable (76, 77, 78, 79).

5. The prevention system according to any of claims 1-3, **characterized in that** for interlocking the locked engine hood (45), or for preventing the moving of the linkage (132) of the gear-box through the gear lever (136), or optionally for interlocking the lock of the luggage compartment the interlocking unit (8, 10, 11) comprises a guiding shaft (82) biassed with a compression spring (84) and preventing the movement of a lock rail (83) turning out from a lock rail-house (88), said guiding shaft is connected to the interlocking-control bowden-cable (76, 77, 78), and the interlocking unit further comprises an interlocking shaft (87) biassed with a compression spring (84) and arranged perpendicular by the guiding shaft (82), in cooperation therewith.

6. The prevention system according to any of claims 1-5, **characterized in that** for the movement of the guiding shaft (82), the interlocking rod (93) or the shut-off valve (99) of each interlocking unit (8, 9, 10, 11) providing the anti-theft protective state is associated with a direct electric motor drive controlled by the central electronic unit (6).

7. The prevention system according to any of claims 1-6, **characterized in that** for swithcing off the drive unit (70), which is automatically switched on when the engine (120) of the motorcar is stopped, a card-reader (1) is arranged in the passenger cabin (A), said card-reader having a unique coding unit (22) for sending a signal.

8. The prevention system according to any of claims 1-6, **characterized in that** for swithcing off the drive unit (70) with electric motor, which is automatically switched on when the engine (120) of the motorcar is stopped, the system is provided with a Bluetooth-system (2) contolled by a mobile phone and a keyboard (21) in the passenger cabin (A), said Bluetooth-system (2) having a unique coding unit (22) for sending the signal.

9. The prevention system according to any of claims 1-8, **characterized in that** in addition to the mechanical interlocking units (8, 9, 10, 11) operated by the drive unit (70), the system further comprises a starting-prohibitor (63) for blocking the operation of the self-starter relay (32), said starting-prohibitor being connected to the central electronic unit.

10. The prevention system according to claim 9, **characterized in that** in addition to the starting-prohibitor (63), the system further comprises a supplementary electric prohibitor (631).

11. The prevention system according to any of claims 1-10, **characterized in that** the electric motor (7) of the drive unit (70) is also provided with overcurrent protection (604) and electric motor circuit inhibitor (68).

12. The prevention system according to any of claims 1-11, **characterized in that** the drive unit (70) with electric motor is provided with a reversing circuit (69) for releasing the blockage due to mechanical reasons.

13. The prevention system according to any of claims 1-12, **characterized in that** it is provided with a sound signal and a light signal within the passenger cabin (A) of the motorcar indicating the switch on and off state of the prevention system.

14. The prevention system according to any of claims 1-13, **characterized in that** both the open position (X) and the closed position (Y) of the drive unit (70) is provided with a position sensor (64) for providing the necessary instructions of the control processor (60).

15. The prevention system according to any of claims 1-14, **characterized in that** the interlocking units (8, 9, 10, 11) are provided with interlocking position sensors (641) providing information for the control processor (60.)

## Patentansprüche

1. Schutzsystem gegen Kraftfahrzeugdiebstahl bei einem Kraftfahrzeug mit manuellem Schaltgetriebe, für eine Nachrüstung nach der Fertigstellung des Kraftfahrzeugs, wobei das System geeignet ist, sich an den Betrieb des Motors des Kraftfahrzeugs anzupassen und sich automatisch zu aktivieren, wobei das System einen Zündschalter (3), der von einer Batterie (5) des Kraftfahrzeugs gespeist wird, eine mit einem Steuerprozessor (60) versehene Zentralelektronik (6) sowie eine Antriebseinheit (70) mit einem von der Zentralelektronik (6) gesteuerten Elektromotor umfasst, wobei die Antriebseinheit einen Elektromotor (7), ein Getriebe (71), eine Trapezgewindespindel (72) und eine Bowdenzug-Betätigungsvorrichtung (73) umfasst, die zwischen einer offenen Position (X) und einer geschlossenen Position (Y) der Antriebseinheit (70) bewegbar ist, und das System weiterhin eine hydraulische Druckreduziereinheit (90, 96), die von der Antriebseinheit (70) zum Deaktivieren der Kupplung betätigt wird, Verriegelungseinheiten (8, 10, 11, 9) zum Verriegeln des Schlosses des Motorraums, der Hydraulik, der Schaltgetriebe und gegebenenfalls des Schlosses des Gepäckraums, die über die Bowdenzug-Betätigungsvorrichtung (73) und die die Riegel betätigenden Bowdenzüge (76, 77, 78, 79) an die Antriebseinheit (70) angeschlossen sind, umfasst, **dadurch gekennzeichnet, dass** die Antriebseinheit (70), die beim Ausschalten des Motors (120) des Kraftfahrzeugs automatisch angeht, einen verriegelten Schutzzustand auch im Fall einer vollständig entladenen Batterie (5) aufrechterhält, wobei der Antriebseinheit (70) eine Steuereinheit (601) zur Steuerung der Einschaltbedingungen des Schutzes zugeordnet ist, wobei die Einschaltbedingungen einen ausgeschalteten Zustand des Zündschalters (3), ein Signal eines Ladungssensors (61) für einen ladungsfreien Zustand der Batterie (5) und ein Signal eines Vibrationssensors (62) für einen vibrationsfreien Zustand des Kraftfahrzeugs umfassen, wobei die Verriegelungseinheit (78) des Schaltgetriebes in der Nähe der Kulisse (132) des Schaltgetriebes angeordnet ist, und die Druckreduziereinheit (90, 96) über Mittel zur Begrenzung des hinter dem Kolben (103) des Kupplungszylinders erzeugten Drucks verfügt.

2. Schutzsystem nach Anspruch 1, **dadurch gekennzeichnet, dass** das Druckbegrenzungsmittel der Druckreduziereinheit (90) ein Absperrventil (99) ist, das zwischen der Druckreduziereinheit (90) und dem Kupplungszylinder (102) eingesetzt ist und in Verbindung mit dem das Ventil steuernden Bowdenzug (79) der Hydraulik arbeitet.

3. Schutzsystem nach Anspruch 1, **dadurch gekennzeichnet, dass** die Druckreduziereinheit (96) eine Verriegelungsstange (93) als Druckbegrenzungsmittel umfasst, die mit einer Druckfeder (97) versehen und zur Steuerung der gewünschten Werte des Hydraulikdrucks ausgebildet ist, wobei die Verriegelungsstange senkrecht zur Achse des Druckminderungskolbens (91) angeordnet ist und in Verbindung mit dem das Ventil steuernden Bowdenzug (79) der Hydraulik arbeitet.

4. Schutzsystem nach einem der Ansprüche 1 bis 3, **dadurch gekennzeichnet, dass** zum Verriegeln der abgeschlossenen Motorhaube (45) oder zum Verhindern des Bewegens der Kulisse (132) des Schaltgetriebes durch den Schalthebel (136) oder gegebenenfalls zum Verriegeln des Schlosses des Gepäckraums die Verriegelungseinheit (8, 10, 11) eine Schaltwelle (82) umfasst, die mit einer Druckfeder (84) vorgespannt ist und verhindert, dass sich eine Verriegelungszunge (83) aus einem Verriegelungszungengehäuse (88) nach außen dreht, wobei die Schaltwelle mit dem jeweiligen den Riegel betätigenden Bowdenzug (76, 77, 78, 79) verbunden ist.

5. Schutzsystem nach einem der Ansprüche 1 bis 3, **dadurch gekennzeichnet, dass** zum Verriegeln der abgeschlossenen Motorhaube (45) oder zum Verhindern des Bewegens der Kulisse (132) des Schaltgetriebes durch den Schalthebel (136) oder gegebenenfalls zum Verriegeln des Schlosses des Gepäckraums die Verriegelungseinheit (8, 10, 11) eine Schaltwelle (82) umfasst, die mit einer Druckfeder (84) vorgespannt ist und verhindert, dass sich eine Verriegelungszunge (83) aus einem Verriegelungszungengehäuse (88) nach außen dreht, wobei die Schaltwelle mit dem den Riegel betätigenden Bowdenzug (76, 77, 78) verbunden ist, und die Verriegelungseinheit ferner eine Verriegelungswelle (87) aufweist, die mit einer Druckfeder (84) vorgespannt und senkrecht zu der Schaltwelle (82), in Zusammenarbeit mit dieser angeordnet ist.

6. Schutzsystem nach einem der Ansprüche 1 bis 5, **dadurch gekennzeichnet, dass** zur Bewegung der Schaltwelle (82), der Verriegelungsstange (93) oder des Absperrventils (99) jeder den Diebstahlschutzzustand sicherstellenden Verriegelungseinheit (8, 9, 10, 11) ein von der Zentralelektronik (6) gesteuerter unmittelbarer Elektromotorantrieb zugeordnet ist.

7. Schutzsystem nach einem der Ansprüche 1 bis 6, **dadurch gekennzeichnet, dass** zum Ausschalten der Antriebseinheit (70), die beim Ausschalten des Motors (120) des Kraftfahrzeugs automatisch angeht, ein Kartenleser (1) im Fahrgastraum (A) angeordnet ist, wobei der Kartenleser eine spezifische Codiereinheit (22) zum Senden eines Signals aufweist.

8. Schutzsystem nach einem der Ansprüche 1 bis 6, **dadurch gekennzeichnet, dass** zum Ausschalten der elektromotorischen Antriebseinheit (70), die beim Abstellen des Motors (120) des Kraftfahrzeugs automatisch angeht, das System über ein mittels eines Mobiltelefons und einer Tastatur (21) im Fahrzeugraum (A) gesteuertes Bluetooth-System (2) verfügt, wobei das Bluetooth-System (2) eine spezifische Codiereinheit (22) zum Senden des Signals aufweist.

9. Schutzsystem nach einem der Ansprüche 1 bis 8, **dadurch gekennzeichnet, dass** das System zusätzlich zu den mechanischen Verriegelungseinheiten (8, 9, 10, 11), die von der Antriebseinheit (70) betätigt werden, ferner eine Anlasssperre (63) zum Blockieren des Betriebs des Anlasserrelais (32) umfasst, wobei die Anlasssperre mit der Zentralelektronik verbunden ist.

10. Schutzsystem nach Anspruch 9, **dadurch gekennzeichnet, dass** das System zusätzlich zu der Anlasssperre (63) einen zusätzlichen elektrischen Startblocker (631) umfasst.

11. Schutzsystem nach einem der Ansprüche 1 bis 10, **dadurch gekennzeichnet, dass** der Elektromotor (7) der Antriebseinheit (70) auch mit einem Überstromschutz (604) und einer Sperre (68) für die Elektromotorschaltung versehen ist.

12. Schutzsystem nach einem der Ansprüche 1 bis 11, **dadurch gekennzeichnet, dass** die elektromotorische Antriebseinheit (70) mit einer Umkehrschaltung (69) zum Lösen einer Verklemmung aus mechanischen Gründen versehen ist.

13. Schutzsystem nach einem der Ansprüche 1 bis 12, **dadurch gekennzeichnet, dass** es mit einem Tonsignal und einem Lichtsignal innerhalb des Fahrgastraums (A) des Kraftfahrzeugs versehen ist, die den Ein- und Ausschaltzustand des Schutzsystems anzeigen.

14. Schutzsystem nach einem der Ansprüche 1 bis 13, **dadurch gekennzeichnet, dass** sowohl die offene Position (X) als auch die geschlossene Position (Y) der Antriebseinheit (70) mit einem Positionssensor (64) zum Bereitstellen der erforderlichen Anweisungen des Steuerprozessors (60) versehen sind.

15. Schutzsystem nach einem der Ansprüche 1 bis 14, **dadurch gekennzeichnet, dass** die Verriegelungseinheiten (8, 9, 10, 11) mit Verriegelungspositionssensoren (641) versehen sind, die Informationen für den Steuerprozessor (60) liefern.

## Revendications

1. Système de prévention contre le vol d'automobile d'une automobile à boîte de vitesses manuelle, destiné à être installé postérieurement à la production de l'automobile, lequel système est conçu pour s'ajuster au fonctionnement du moteur de l'automobile et pour être automatiquement actif, ledit système comprenant un commutateur d'allumage (3) fourni par une batterie (5) de l'automobile et une unité électronique centrale (6) pourvue d'un processeur de commande (60) ainsi que d'une unité d'entraînement (70) avec un moteur électrique commandé par l'unité électronique centrale (6), dans lequel ladite unité d'entraînement comprend un moteur électrique (7), une transmission (71), un arbre (72) de filetage trapézoïdal et un moteur à câble bowden (73) conçu pour se déplacer entre une position ouverte (X) et une position fermée (Y) de l'unité d'entraînement (70), et le système comprend en outre une unité de réduction de pression hydraulique (90, 96) actionnée par l'unité d'entraînement (70) pour désactiver l'embrayage, et des unités de verrouillage (8, 10, 11, 9) destinées à verrouiller le verrou du compartiment moteur, l'hydraulique, la boîte de vitesses et éventuellement le verrou du coffre, qui sont connectés à l'unité d'entraînement (70) par l'intermédiaire du moteur à câble bowden (73) et de câbles bowden de commande de verrouillage (76, 77, 78, 79), **caractérisé en ce que** l'unité d'entraînement (70), qui est automatiquement activée lorsque le moteur (120) de l'automobile est arrêté, maintient un état de protection verrouillé même lorsque la batterie (5) est complètement épuisée, ladite unité d'entraînement est associée à une unité de commande (601) destinée à commander les conditions de mise sous tension de la protection, lesdites conditions de mise sous tension comprenant l'état hors tension du commutateur d'allumage (3), un signal d'un capteur de charge (61) sur un état exempt de charge de la batterie (5), et un signal d'un capteur de vibration (62) sur un état exempt de vibration de l'automobile, dans lequel l'unité de verrouillage (78) de la boîte de vitesses est agencée à proximité de la liaison (132) de la boîte de vitesses, et l'unité de réduction de pression (90, 96) est pourvue d'un moyen de limitation de la pression générée derrière le piston (103) du cylindre de débrayage.

2. Système de prévention selon la revendication 1, **caractérisé en ce que** le moyen de limitation de pression de l'unité de réduction de pression (90) est une soupape d'arrêt (99) agencée entre l'unité de réduction de pression (90) et le cylindre de débrayage (102) et fonctionne en communication avec le câble bowden de commande de soupape (79) de l'hydraulique.

3. Système de prévention selon la revendication 1, **caractérisé en ce que** l'unité de réduction de pression (96) comprend, comme moyen de limitation de pression, une tige de verrouillage (93) pourvue d'un ressort de compression (97) et conçue pour commander les valeurs souhaitées de la pression hydraulique, dans lequel la tige de verrouillage est agencée perpendiculairement par l'axe du piston de réduction de pression (91) et fonctionne en communication avec le câble bowden d'actionnement de soupape (79) de l'hydraulique.

4. Système de prévention selon l'une quelconque des revendications 1 à 3, **caractérisé en ce que,** pour le verrouillage du capot moteur (45) verrouillé, ou pour empêcher le déplacement de la liaison (132) de la boîte de vitesses par l'intermédiaire du levier de vitesses (136), ou éventuellement pour verrouiller le verrou du coffre, l'unité de verrouillage (8, 10, 11) comprend un arbre de guidage (82) pressé avec un ressort de compression (84) et empêchant le mouvement d'un rail de verrou (83) sortant d'un logement de rail de verrou (88) en tournant, ledit arbre de guidage étant connecté au câble bowden de commande de verrouillage (76, 77, 78, 79).

5. Système de prévention selon l'une quelconque des revendications 1 à 3, **caractérisé en ce que,** pour le verrouillage du capot moteur (45) verrouillé, ou pour empêcher le déplacement de la liaison (132) de la boîte de vitesses par l'intermédiaire du levier de vitesses (136), ou éventuellement pour verrouiller le verrou du coffre, l'unité de verrouillage (8, 10, 11) comprend un arbre de guidage (82) pressé avec un ressort de compression (84) et empêchant le mouvement d'un rail de verrou (83) sortant en tournant d'un logement de rail de verrou (88), ledit arbre de guidage est connecté au câble bowden de commande de verrouillage (76, 77, 78), et l'unité de verrouillage comprend en outre un arbre de verrouillage (87) pressé avec un ressort de compression (84) et agencé perpendiculairement par l'arbre de guidage (82), en coopération avec celui-ci.

6. Système de prévention selon l'une quelconque des revendications 1 à 5, **caractérisé en ce que,** pour le mouvement de l'arbre de guidage (82), la tige de verrouillage (93) ou la soupape d'arrêt (99) de chaque unité de verrouillage (8, 9, 10, 11) fournissant l'état protecteur antivol est associée à un entraînement de moteur électrique direct commandé par l'unité électronique centrale (6).

7. Système de prévention selon l'une quelconque des revendications 1 à 6, **caractérisé en ce que,** pour la mise hors tension de l'unité d'entraînement (70), qui est automatiquement mise sous tension lorsque le moteur (120) de l'automobile est arrêté, un lecteur de carte (1) est agencé dans la cabine passagers (A), ledit lecteur de carte présentant une unité de codage unique (22) pour l'émission d'un signal.

8. Système de prévention selon l'une quelconque des revendications 1 à 6, **caractérisé en ce que** pour la mise hors tension de l'unité d'entraînement (70) avec le moteur électrique, qui est automatiquement mis sous tension lorsque le moteur (120) de l'automobile est arrêté, le système est pourvu d'un système Bluetooth (2) commandé par un téléphone mobile et un clavier (21) dans la cabine passagers (A), ledit système Bluetooth (2) présentant une unité de codage unique (22) pour l'émission du signal.

9. Système de prévention selon l'une quelconque des revendications 1 à 8, **caractérisé en ce que,** en plus des unités de verrouillage mécanique (8, 9, 10, 11) actionnées par l'unité d'entraînement (70), le système comprend en outre un inhibiteur de démarrage (63) destiné à bloquer le fonctionnement du relais de démarreur automatique (32), ledit inhibiteur de démarrage étant connecté à l'unité électronique centrale.

10. Système de prévention selon la revendication 9, **caractérisé en ce que,** en plus de l'inhibiteur de démarrage (63), le système comprend en outre un inhibiteur électrique (631) supplémentaire.

11. Système de prévention selon l'une quelconque des revendications 1 à 10, **caractérisé en ce que** le moteur électrique (7) de l'unité d'entraînement (70) est également pourvu d'une protection contre une surintensité (604) et d'un inhibiteur de circuit de moteur électrique (68).

12. Système de prévention selon l'une quelconque des revendications 1 à 11, **caractérisé en ce que** l'unité d'entraînement (70) avec moteur électrique est pourvue d'un circuit d'inversion (69) destiné à libérer le blocage dû à des raisons mécaniques.

13. Système de prévention selon l'une quelconque des revendications 1 à 12, **caractérisé en ce qu'**il est pourvu d'un signal sonore et d'un signal lumineux dans la cabine passagers (A) de l'automobile indiquant la mise sous et hors tension du système de prévention.

14. Système de prévention selon l'une quelconque des revendications 1 à 13, **caractérisé en ce que** à la fois la position ouverte (X) et la position fermée (Y) de l'unité d'entraînement (70) est pourvue d'un capteur de position (64) destiné à fournir les instructions nécessaires du processeur de commande (60).

15. Système de prévention selon l'une quelconque des revendications 1 à 14, **caractérisé en ce que** les unités de verrouillage (8, 9, 10, 11) sont pourvues de capteurs de position de verrouillage (641) fournissant des informations pour le processeur de commande (60).
